# EUROPEAN PATENT APPLICATION

(11) **EP 2 869 581 A1**
(43) Date of publication of application: **06.05.2015**
(21) Application number: 13808486.8
(22) Date of filing: 25.06.2013
(51) Int. Cl.: H04N 21/2662, H04N 21/431

(54) **COMMUNICATIONS SYSTEM, TERMINAL DEVICE, VIDEO DISPLAY METHOD, AND PROGRAM**

(30) Priority: 29.06.2012 JP 2012146948
(71) Applicant: Brother Kogyo Kabushiki Kaisha, Nagoya-shi, Aichi 467-8561 (JP)
(72) Inventor: USHIYAMA, Kentaro, Nagoya-shi, Aichi 4678561 (JP)
(74) Representative: Smith, Samuel Leonard
(86) International application number: PCT/JP2013/067323
(87) International publication number: WO 2014/002978

(57) **Abstract**

There are provided a communication system, a terminal device, a video display method, and a program, capable of flexibly displaying an image having a low resolution and an image having a high resolution based on the degree of margin of the network bandwidth or the performance of the terminal. The terminal device determines at least one piece of divided image data that is an acquisition target among a plurality of pieces of the divided image data configuring video data having a high resolution according to at least one of a degree of margin of a network bandwidth and performance of the terminal device. Then, the terminal device displays the determined divided image data at least in a part of an image frame configuring video data of a low resolution.

## Description

### Technical Field

The present invention relates to a system that distributes a plurality of pieces of image data having mutually different resolutions.

### Background Art

In the past, for example, in a streaming distribution, a technique for changing a resolution of an image to be transmitted based on a network environment has been known (see Patent Literature 1). For example, in Patent Literature 1, in a case where the network environment is good, a transmission device transmits image data having a resolution higher than a standard resolution to a reception terminal. On the other hand, in a case where the network environment is bad, the transmission device transits image data of the standard resolution to the reception terminal. In addition, in a case where the load of the reception terminal that receives the image data having the standard resolution is low, the reception terminal performs up-scaling of the image data having the standard resolution into image data having high resolution.

### Prior Art Literature

### Patent Literature

Patent Literature 1: JP 2009-290691 A

### Summary of the Invention

### Problem to be solved by the Invention

However, according to the technique disclosed in Patent Literature 1, for example, in a case where the network band is narrow, it is difficult to display an image having high resolution. In such a case, it is necessary for the reception terminal to perform up-scaling of image data having the standard resolution into image data having the high resolution. Accordingly, in the technique disclosed in Patent Literature 1, it is difficult to display an image having a low resolution and an image having a high resolution in a flexible manner based on the degree of margin of the network bandwidth.

In addition, according to the technique disclosed in Patent Literature 1, for example, in a case where the network bandwidth is broad, and the CPU load of the reception terminal is low, the reception terminal can receive image data having the high resolution. However, there are cases where the image data having the high resolution cannot be displayed in a speedy manner due to low performance such as low drawing performance of the reception terminal. In such a case, according to the technique disclosed in Patent Literature 1, it is difficult to display an image having a low resolution and an image having a high resolution in a flexible manner based on the performance of the reception terminal.

The present invention is devised in consideration of the above-described points and provides a communication system, a terminal device, a video display method, and a program capable of flexibly displaying an image having a low resolution and an image having a high resolution based on the degree of margin of the network bandwidth or the performance of the terminal.

### Means for solving the Problem

In order to solve the above problem, the invention according to claim 1 is a communication system in which a terminal device and a server device are communicable with each other through a network,
wherein the server device comprises a storage means that stores a plurality of pieces of video data including first video data and second video data, the first video data representing a display target with a first resolution, the second video data representing the display target with a second resolution that is higher than the first resolution,
at least the second video data is configured by a plurality of pieces of divided image data that is acquired by dividing image frames configuring the second video data, and
the terminal device comprises:
a first control means that sequentially acquires image frames configuring the first video data from the server device and controls to display a video based on the acquired image frames;
a first determination means that determines at least one piece of the divided image data that is an acquisition target among the plurality of pieces of the divided image data configuring the second video data according to at least one of a degree of margin of a bandwidth of the network between the terminal device and the server device and performance of the terminal device; and
a second control means that controls to display the divided image data determined by the first determination means at least in a part of the image frames configuring the first video data.

The invention according to claim 2 is the communication system according to claim 1,
wherein the second control means replaces a part of a display range of the image frame configuring the first video data with the divided image data determined by the first determination means so as to be displayed.

The invention according to claim 3 is the communication system according to claim 1 or 2,
wherein the terminal device further comprises a frame buffer in which the image frame of the display range is written, and
the second control means executes:
an acquisition process of acquiring the divided image data determined by the first determination means;
a first writing process of writing the image frame configured by the acquired divided image data in the frame buffer;
a second writing process of writing the image frame configuring the first video data acquired by the first control means in a write area of the frame buffer in which the image frame is not written by the first writing process; and
a display process of displaying the image frames written in the frame buffer by the first and second writing processes.

The invention according to claim 4 is the communication system according to claim 1 or 2,
wherein the first control means sequentially acquires the video data, the video data being partitioned into a plurality of blocks at units of a predetermined time, each of the blocks including one or a plurality of the image frames configuring the first video data from the server device and controls to display a video based on the video data acquired for each block, and
the first determination means determines the divided image data that is the acquisition target every time the video data for each block is acquired.

The invention according to claim 5 is the communication system according to claim 1 or 2,
further comprising a second determination means that determines preferentially the video data having a high resolution and a high ratio of occupancy of the image frame in a display range for a display among the plurality of pieces of the video data stored in the storage means as the first video data,
wherein the first control means acquires the image frames configuring the first video data determined by the second determination means from the server device with higher priority than the plurality of pieces of the divided image data configuring the second video data.

The invention according to claim 6 is the communication system according to claim 1 or 2,
wherein the first determination means determines more pieces of the divided image data that is the acquisition target among the plurality of pieces of the divided image data as a value representing the degree of margin is larger or a value representing the performance is larger.

The invention according to claim 7 is the communication system according to claim 1 or 2,
further comprising a third determination means that determines a display range designated as a range to be displayed in a plurality of the image frames configuring the first video data,
wherein the first determination means determines preferentially the divided image data having a high ratio of occupancy of the image frame in the display range determined by the third determination means.

The invention according to claim 8 is the communication system according to claim 1 or 2,
further comprising a third determination means that determines a display range designated as a range to be displayed in a plurality of the image frames configuring the first video data,
wherein the first determination means determines preferentially the divided image data configuring the image frame including an area narrower than the display range in an area of a predetermined range and from the center of the display range determined by the third determination means.

The invention according to claim 9 is a program causing a computer of a terminal device, which is communicable through a network with a server device storing a plurality of pieces of video data including first video data and second video data, the first video data representing a display target with a first resolution, the second video data representing the display target with a second resolution higher than the first resolution, and storing at least a plurality of pieces of divided image data acquired by dividing image frames configuring the second video data, to execute:
a display step of sequentially acquiring image frames configuring the first video data from the server device and displaying a video based on the acquired image frames;
a determination step of determining at least one piece of the divided image data that is an acquisition target among the plurality of pieces of the divided image data configuring the second video data according to at least one of a degree of margin of a bandwidth of the network between the terminal device and the server device and performance of the terminal device; and
a display step of displaying the determined divided image data at least in a part of the image frame configuring the first video data.

The invention according to claim 10 is a terminal device that is communicable through a network with a server device that stores a plurality of pieces of video data including first video data and second video data, the first video data representing a display target with a first resolution, the second video data representing the display target with a second resolution higher than the first resolution, and stores at least a plurality of pieces of divided image data that is acquired by dividing image frames configuring the second video data,
the terminal device comprising:
a first control means that sequentially acquires image frames configuring the first video data from the server device and controls to display a video based on the acquired image frames;
a first determination means that determines at least one piece of the divided image data that is an acquisition target among the plurality of pieces of the divided image data configuring the second video data according to at least one of a degree of margin of a bandwidth of the network between the terminal device and the server device and performance of the terminal device; and
a second control means that controls to display the divided image data determined by the first determination means at least in a part of the image frame configuring the first video data.

The invention according to claim 11 is a video display method, which is performed by a terminal device that is communicable through a network with a server device that stores a plurality of pieces of video data including first video data and second video data, the first video data representing a display target with a first resolution, the second video data representing the display target with a second resolution higher than the first resolution, and stores at least a plurality of pieces of divided image data that is acquired by dividing image frames configuring the second video data,
the video display method comprising:
a display step of sequentially acquiring image frames configuring the first video data from the server device and displaying a video based on the acquired image frames;
a determination step of determining at least one piece of the divided image data that is an acquisition target among the plurality of pieces of the divided image data configuring the second video data according to at least one of a degree of margin of a bandwidth of the network between the terminal device and the server device and performance of the terminal device; and
a display step of displaying the determined divided image data at least in a part of the image frame configuring the first video data.

### Advantageous Effects of the Invention

According to the inventions described in claims 1, and 9 to 11, an image having a low resolution and an image having a high resolution can be displayed in a flexible manner based on the degree of margin of the network bandwidth or the performance of the terminal.

According to the invention described in claim 2, also for an area in which an image having high a resolution cannot be acquired, an image having no defect can be displayed.

According to the invention described in claim 3, a part of the display range of an image frame configuring the first video data can be replaced with divided image data with high efficiency so as to be displayed.

According to the invention described in claim 4, divided image data that is optimal at each time point can be determined as an acquisition target based on the reproduction progress status and the acquisition progress status of the video data.

According to the invention described in claim 5, an image having higher image quality can be displayed in a broader display range.

According to the invention described in claim 6, an image having higher image quality can be displayed as the degree of margin of the bandwidth of the network becomes higher or the performance of the terminal device becomes higher.

According to the invention described in claim 7, an image having high image quality can be displayed in a broader display range.

According to the invention described in claim 8, an image having high image quality can be displayed with priority being given to an area of the center portion of the display region.

### Brief Description of the Drawings

Fig. 1 is a diagram that illustrates a schematic configuration example of a communication system S according to the present embodiment.
Fig. 2 is a diagram that illustrates one image frame configuring video data of each layer.
Fig. 3 is a flowchart that illustrates a main process of a control unit 21 of a client 2.
Fig. 4A is a flowchart that illustrates a download process performed by the control unit 21 of the client 2.
Fig. 4B is a diagram that illustrates an example of a content of an acquisition target list generated by a block priority determining process.
Fig. 5 is a flowchart that illustrates a block priority determining process performed by the control unit 21 of the client 2.
Fig. 6 is a flowchart that illustrates a reproduction process performed by the control unit 21 of the client 2.
Fig. 7 is a flowchart that illustrates a screen drawing process performed by the control unit 21 of the client 2.
Fig. 8A is a diagram that illustrates a drawing region of an image frame of Layer 1.
Fig. 8B is a diagram that illustrates a drawing region of a divided image frame of Layer 2.
Fig. 8C is a diagram that illustrates the appearance of determining video data blocks as acquisition target candidates in video streams of Layer 1 and Layer 2.
Fig. 8D is a diagram that illustrates the appearance of determining video data blocks as acquisition target candidates in video streams of Layer 1 and Layer 2.

### Mode for carrying out the Invention

Hereinafter, embodiments of the present invention will be described with reference to the drawings.

### [1. Overview of Configuration and Operation of Communication System S]

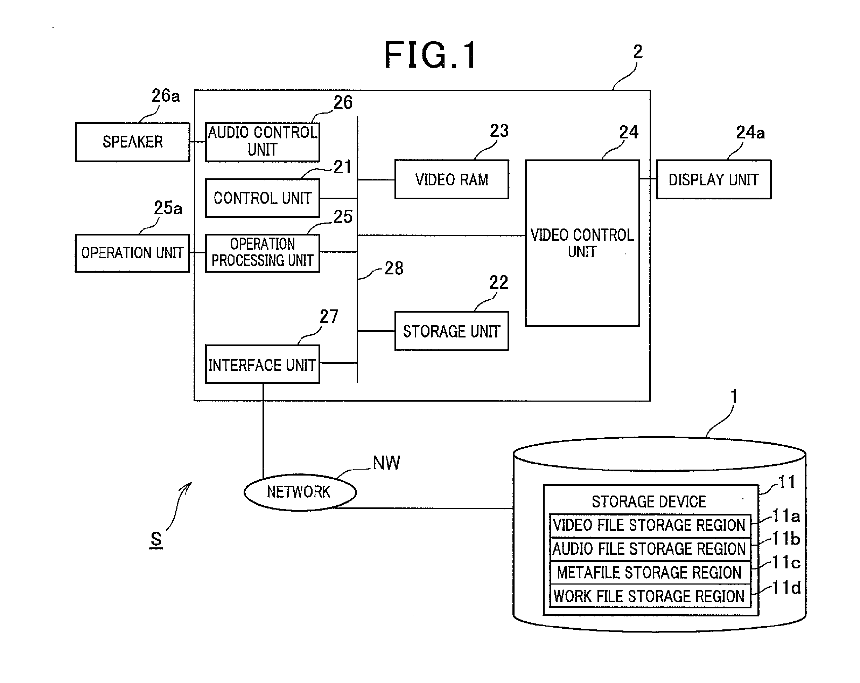

First, the overview of the configuration and the operation of a communication system according to the present embodiment will be described with reference to Figs. 1 and the like. Fig. 1 is a diagram that illustrates a schematic configuration example of the communication system S according to the present embodiment. As illustrated in Fig. 1, the communication system S is configured to include a distribution server 1 and a client 2. The distribution server 1 is an example of a server device according to the present invention. The client 2 is an example of a terminal device according to the present invention. In the example illustrated in Fig. 1, while one client is illustrated, actually, more clients are present. In addition, the distribution server 1 and the client 2 are communicable through a network NW. The network NW, for example, is configured by the Internet, a mobile network, a gateway, and the like.

The distribution server 1, for example, receives an upload of content from the client 2. To the uploaded content, a content ID used for identifying the content from the other content is applied. The content, for example, includes video data and audio data. The video data, for example, is data that is acquired by photographing a subject using a high-resolution camera having a lens capable of photographing a wide range built therein. As examples of the lens capable of photographing a wide range, there are a wide lens, a fish-eye lens, a 360 lens, and the like. In addition, the video data may be data that is acquired by photographing a same subject from mutually different viewpoints using a plurality of cameras. In such a case, a plurality of pieces of video data is included in the content. In addition, the audio data may be data that is acquired by collecting sounds using a plurality of microphones. In such a case, a plurality of pieces of audio data is included in the content.

In addition, the distribution server 1, for example, generates a plurality of pieces of video data having mutually different resolutions based on video data that is included in an uploaded content. For example, one piece of video data is copied, and video data is generated for each of a plurality of layers from a low resolution to a high resolution. In the present embodiment, while three layers of Layer 1 to Layer 3 are described as an example, the layers are not limited thereto. For example, video data of Layer 1 is video data of a low resolution. Video data of Layer 2 is video data of an intermediate resolution. Video data of Layer 3 is video data of a high resolution. Here, the video data of the low resolution or the intermediate resolution is an example of first video data representing a display target with a first resolution. In addition, the video data of the intermediate resolution or the high resolution is an example of second video data representing a display target with a second resolution higher than the first resolution. Here, the display target is a subject that is photographed by a camera.

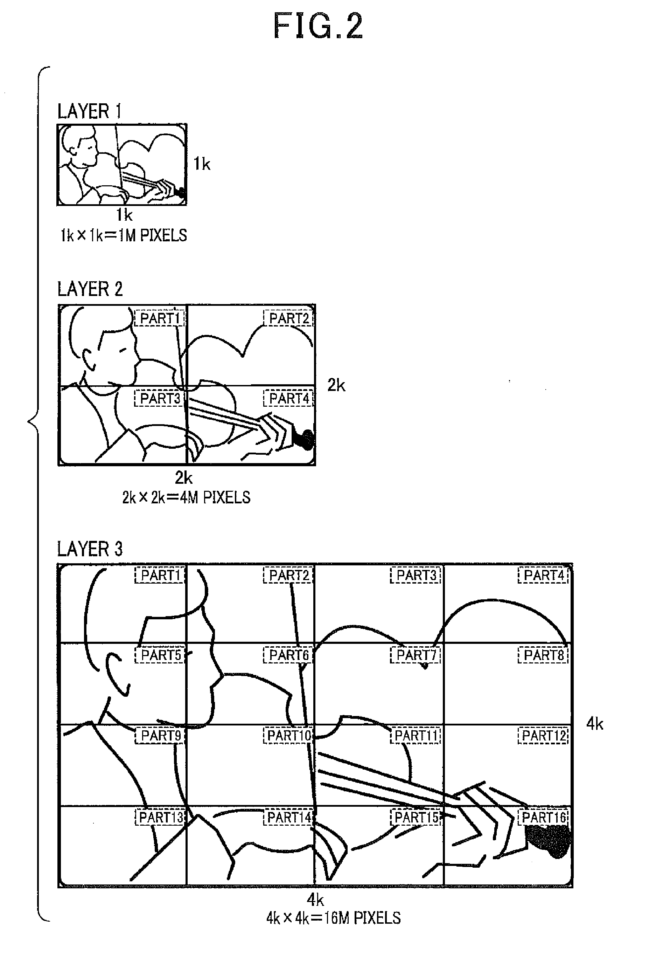

In addition, the distribution server 1 generates a plurality of pieces of divided image data by dividing an image frame configuring the video data of Layer 2. In other words, the whole display region of the image frame is divided. Accordingly, the video data of Layer 2 is configured by a plurality of pieces of divided video image data acquired by dividing the image frame configuring the video data of Layer 2. In addition, the distribution server 1 generates a plurality of pieces of divided image data by dividing an image frame configuring the video data of Layer 3. Fig. 2 is a diagram that illustrates one image frame configuring video data of each layer. In the example illustrated in Fig. 2, the number of pixels per image frame of Layer 1 is 1 M (mega) pixels. In addition, the number of pixels per image frame of Layer 2 is 4 M pixels. Furthermore, the number of pixels per image frame of Layer 3 is 16 M pixels. In the example illustrated in Fig. 2, the image frame of Layer 2 is equally divided into four parts. In other words, four image frames of parts 1 to 4 can be acquired from one image frame of Layer 2. Each image frame divided as such will be referred to as a "divided image frame". On the other hand, one image frame of Layer 3 is equally divided into 16 parts. The number of pixels per divided image frame divided as such is 1 M pixels. In other words, in the example illustrated in Fig. 2, the number of pixels of the divided image frame of each of Layers 2 and 3 is the same as the number of pixels of the image frame of Layer 1.

The dividing of the image frame is performed for each of a plurality of image frames, which configures video data, each having different reproduction time. The reproduction time, for example, is an elapse time after the start of reproduction of video data. For each part described above, a plurality of pieces of divided image data is collected, whereby video data is generated. In the example illustrated in Fig. 2, four pieces of video data of Layer 2 are generated. On the other hand, 16 pieces of video data of Layer 3 are generated. Each video data generated as such is compressed in a predetermined compression format such as MPEG and is stored in a video file. To each video file, a file name used for identifying the video file from the other video files is applied. On the other hand, for Layer 1 illustrated in Fig. 2, video data that is not divided is compressed in a predetermined compression format and is stored in a video file. Here, the image frame of the video data of Layer 1 may be configured to be divided as well. In addition, in the example illustrated in Fig. 2, while the image frame is configured to be divided in a lattice pattern, the image frame may be divided into any other pattern. Furthermore, in the example illustrated in Fig. 2, while the image frame may be divided such that the area of the whole display region of each divided frame of the same layer is uniform, the image frame may be non-uniformly divided.

In addition, the distribution server 1 includes a storage device 11. The storage device 11 is an example of a storage means according to the present invention. The storage device 11, for example, is configured by a hard disk drive (HDD). The storage device 11 stores data of a web page transmitted to the client 2 according to a request from the client 2. In addition, in the storage device 11, a video file storage region 11 a, an audio file storage region 11b, a metafile storage region 11c, and a work file storage region 11d are provided. In the video file storage region 11 a, a plurality of video files described above is stored. Each video file stored in the video file storage region 11a can be shared among a plurality of clients that can access the distribution server 1. In the audio file storage region 11b, a plurality of audio files is stored. In each audio file, audio data included in content is stored with being compressed in a predetermined format. To each audio file, a file name used for identifying the audio file from the other audio files is applied. Each audio file stored in the audio file storage region 11b can be shared among a plurality of clients that can access the distribution server 1.

In the metafile storage region 11c, a metafile of content is stored. To each metafile, a file name used for identifying the metafile from the other metafiles is applied. In the file name of each metafile, an identifier representing that the file is a metafile is included. In the metafile, for example, meta-information that is necessary for the client 2 to reproduce the video data and the audio data described above is stored. In the meta-information, for example, an URL, a content ID, a content name, the number of layers, the number of divisions of the image frame for each layer, attribute information and a storage place of each video file, attribute information and a storage place of the audio file, and the like of the metafile are included. The storage place, for example, is represented by an URL. Based on the content ID or the content name included in the meta-information, a metafile is associated with video data. In the attribute information of a video file, information such as a file name of the video file, a file size of the video file, a layer of video data stored in the video file, a resolution, and the number of pixels per image frame is included. Here, in a video file, video data including a plurality of pieces of divided image data may be stored. In such a case, in the attribute information of the video file, information such as a file name of the video file, a layer of the video data, a resolution, and a coordinate position with respect to the image frame that is a division source is included. In the attribute information of an audio file, a file name of the audio file, a file size (data amount) of the audio file, and the like are included. In addition, in uploaded content, a plurality of pieces of audio data may be included. For example, in the meta-information of such a case, the attribute information and the storage place of each audio file are included. In the attribute information of the audio file of such a case, information of the installation position of a microphone that collects the audio data and the like are included. In addition, in the meta-information, correction parameters used for correcting the video data may be included. In a case where video data is captured using a fish-eye lens, a diagonal view angle, an aspect ratio, and the like are included in the correction parameters. On the other hand, in a case where the video data is captured using a 360 lens, a maximal elevation/depression angle, a minimal elevation/depression angle, and the like are included in the correction parameters. Furthermore, in the meta-information, for example, operation restriction information for restricting a user's operation relating to the reproduction of video data may be included. The operation restriction information, for example, is set based on an instruction from a person uploading content. Each metafile stored in the metafile storage region 11c can be shared among a plurality of clients that can access the distribution server 1.

In the work file storage region 11d, a work file of content is stored. To each work file, a file name used for identifying the work file from the other work files is applied. In the file name of each work file, an identifier representing that the file is a work file is included. In the work file, for example, a URL of a metafile, a content ID, a content name, work information relating to a pseudo camera work for a display target in an image frame configuring video data, and the like are stored. The work information is an example of editing data according to the present invention. Here, the camera work represents an operation of determining the position of a camera with respect to a subject, the angle of the camera with respect to the subject, and the size of the subject by photographer's operating the camera. In the present embodiment, the camera work for a display target in a plurality of image frames that configure video data is performed in a pseudo manner by operating an operation unit as if a user operates an actual camera. Such an operation is called "pseudo camera work operation". By performing the pseudo camera work operation, the user can designate a desired display range of a plurality of image frames that configures the video data. The display range is a range relating to a drawing region in which an image frame is drawn on the screen of a display. The drawing region is designated as a range to be displayed in an image frame. In other words, the drawing region is a range cut out from a photographing range that is defined by the image frame. The user may designate a coordinate position of the drawing region for an image frame to be different for each image frame by performing the pseudo camera work operation. In addition, the user can enlarge or reduce the size of the drawing region with respect to the image frame by performing the pseudo camera work operation. Accordingly, an image within the drawing region is enlarged or reduced. In addition, in the work information described above, for example, a set of the coordinate position of a designated drawing region designated in the image frame with respect to an image frame and a reproduction position of the image frame is included for each image frame for which the drawing region is designated. Here, the reproduction position is a position in time from the start of reproduction of video data. In addition, the coordinate position of the drawing region is a coordinate position with respect to the image frame. Each work file stored in the work file storage region 11d can be shared among a plurality of clients that can access the distribution server 1.

Then, the distribution server 1, for example, in response to a content request from the client 2, transmits a video file and an audio file corresponding to content to the client 2. The transmission of the video file and the audio file, for example, is performed through a streaming distribution that is performed through the network NW. In such a case, the distribution server 1 generates a video stream for each video file based on video data stored in the video file. The video stream is configured by a plurality of video data blocks. Each video data block is data acquired by partitioning the video data of a start position to an end position in units of a predetermined time. In each video data block, one or a plurality of image frames is included. The distribution server 1 generates an audio stream for each audio file based on audio data stored in the audio file. The audio stream is configured by a plurality of audio data blocks. Each audio data block is data acquired by partitioning the audio data of a start position to an end position in units of a predetermined time. The distribution server 1 sequentially transmits the video data blocks included in the generated video stream to the client 2. In addition, the distribution server 1 sequentially transmits the audio data blocks included in the generated audio stream to the client 2.

The client 2, as illustrated in Fig. 1, is configured to include: a control unit 21; a storage unit 22; a video RAM 23; a video control unit 24; an operation processing unit 25; an audio control unit 26; an interface unit 27; a bus 28, and the like. Such constituent elements are connected to the bus 28. A display unit 24a including a display is connected to the video control unit 24. An operation unit 25a is connected to the operation processing unit 25. In the operation unit 25a, for example, there are a mouse, a keyboard, a remote controller, and the like. The control unit 21 receives a user's operation instruction from the operation unit 25a through the operation processing unit 25. The user can perform the pseudo camera work operation described above by using the operation unit 25a. A speaker 26a is connected to the audio control unit 26. The interface unit 27 is connected to the network NW.

The control unit 21 is configured by a CPU, a ROM, a RAM, and the like as a computer. The control unit 21 has a timer function. The control unit 21 is an example of a first control means, a second control means, a first determination means, a second determination means, and a third determination means according to the present invention. The storage unit 22, for example, is configured by a hard disk drive (HDD). In the storage unit 22, an operating system (OS), player software, and the like are stored. The player software is a program that is used for reproducing content. In the player software, a program according to the present invention is included. The player software, for example, may be downloaded from a predetermined server that is connected to the network NW. Alternatively, the player software, for example, may be configured to be recorded on a recording medium and be read through a drive of the recording medium.

The control unit 21 serves as a player that reproduces content by executing the player software. Based on the function of the player, the control unit 21 sequentially acquires video data blocks and audio data blocks that are distributed through a streaming distribution from the distribution server 1 and reproduces content based on the video data blocks and the audio data blocks. More specifically, a buffer memory is provided in the RAM of the control unit 21. In the buffer memory, video data blocks and audio data blocks distributed from the distribution server 1 through a streaming distribution are temporarily stored. The control unit 21 reproduces video data from the buffer memory and outputs the reproduced video data to the video RAM 23. In the video RAM 23, a frame buffer is provided. In the frame buffer, image frames of the reproduced video data are written. The video control unit 24 draws image frames written to the frame buffer on the screen of a display of the display unit 24a according to a control signal supplied from the control unit 21, thereby displaying a video. In other words, the control unit 21 displays a video based on the image frames configuring video data that is acquired from the distribution server 1. In addition, the control unit 21 reproduces audio data from the buffer memory and outputs the reproduced audio data to the audio control unit 26. The audio control unit 26 generates an analog audio signal based on the audio data and outputs the generated analog audio signal to the speaker 26a.

### [2. Operation of Communication System S]

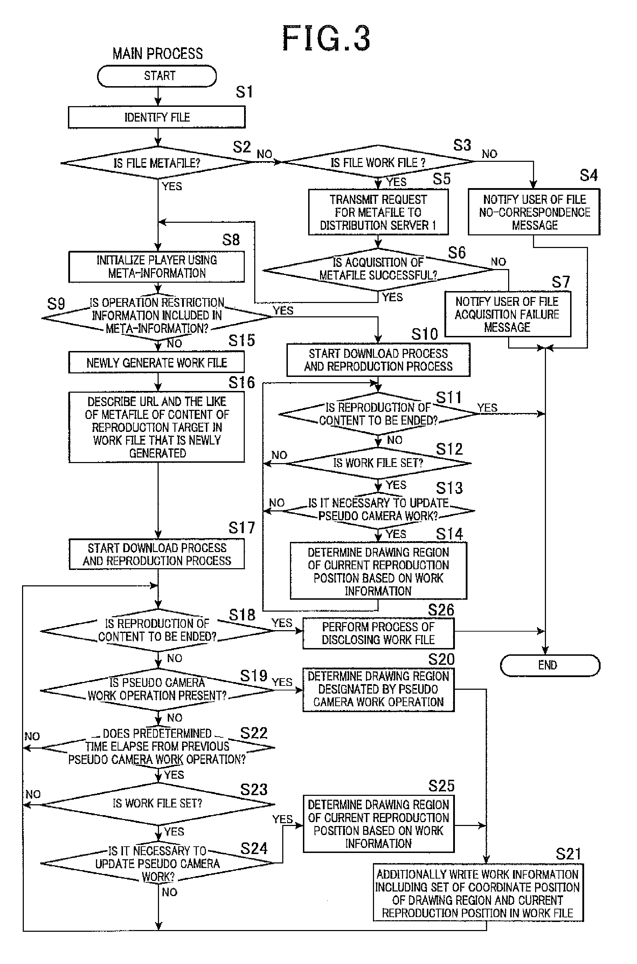

Next, the operation of the communication system S will be described with reference to Figs. 3 to 7 and the like.

### (2-1. Main Process)

First, a main process performed by the control unit 21 of the client 2 will be described with reference to Figs. 3 and the like. For example, when the player software is activated in the client 2, the client 2 transmits a page request to the distribution server 1. Then, the client 2 receives a web page transmitted from the distribution server 1 in response to the page request and displays the received web page on the display of the display unit 24a. On this web page, for example, information of content is selectively displayed. The information of content displayed on the web page is information of some content among a plurality of content uploaded to the distribution server 1. For example, information of content recommended to a user or information of content retrieved through a search based on a keyword input by a user corresponds thereto. In the information of content, for example, a content ID and a content name are included. Then, when the information of content that is a reproduction target is selected by a user operating the operation unit 25a, the information of the selected content is transmitted from the client 2 to the distribution server 1. The distribution server 1 searches a work file from the work file storage region 11d based on the content ID or the content name included in the received information of the content. Then, in a case where the work file is stored in the work file storage region 11d, the work file is transmitted to the client 2. On the other hand, there are cases where the work file is not stored in the work file storage region 11d. In such cases, the distribution server 1 searches for a metafile from the metafile storage region 11c based on the content ID or the content name included in the received information of the content. Then, in a case where the metafile is stored in the metafile storage region 11c, the metafile is transmitted to the client 2. On the other hand, there are cases where the metafile is not stored in the metafile storage region 11c. In such cases, a work file and files other than the metafile are transmitted to the client 2.

In this way, when the file is acquired from the distribution server 1, the client 2 starts the main process illustrated in Fig. 3. In step S1 illustrated in Fig. 3, the control unit 21 of the client 2, for example, identifies the acquired file, for example, based on an identifier included in the file name. Then, the control unit 21 determines whether or not the acquired file is a metafile (step S2). In a case where the acquired file is determined to be a metafile (Yes in step S2), the process proceeds to step S8. On the other hand, in a case where the acquired file is determined not to be a metafile (No in step S2), the process proceeds to step S3. In step S3, the control unit 21 determines whether or not the acquired file is a work file. In a case where the acquired file is determined to be a work file (Yes in step S3), the process proceeds to step S5. On the other hand, in a case where the acquired file is determined not to be a work file (No in step S3), the process proceeds to step S4. In step S4, the user is notified of a file no-correspondence message. The file no-correspondence message is a message representing that the acquired file is not correspondent. For example, the file no-correspondence message is displayed on the display unit 24a or is output from the speaker 26a as an audio, whereby the user is notified thereof.

In step S5, the control unit 21 transmits a request for the metafile based on the URL of the metafile included in the acquired work file to the distribution server 1, and the process proceeds to step S6. In this request for the metafile, for example, the file name of the metafile is included. The distribution server 1 searches for the metafile from the metafile storage region 11c based on the file name included in the received request for the metafile. Then, in a case where the metafile is stored in the metafile storage region 11c, the metafile is transmitted to the client 2.

In step S6, the control unit 21 determines whether or not the acquisition of the metafile is successful. In a case where the metafile is received from the distribution server 1 in response to the request for the metafile, the acquisition of the metafile is determined to be successful (Yes in step S6), and the process proceeds to step S8. On the other hand, in a case where the metafile is not received from the distribution server 1, the acquisition of the metafile is determined to be unsuccessful (No in step S6), and the process proceeds to step S7. In step S7, the user is notified of a file acquisition failure message. The file acquisition failure message is a message that represents the failure of the acquisition of the metafile.

In step S8, the control unit 21 initializes the player using meta-information stored in the acquired metafile. In addition, in a case where the work file is acquired from the distribution server 1, the work file is set in the player. Thereafter, the control unit 21 determines whether or not the operation restriction information is included in the meta-information (step S9). In a case where the operation restriction information is determined to be included in the meta-information (Yes in step S9), the process proceeds to step S10. In other words, in this case, the generation of the work file is restricted. In this way, for example, a person uploading content or the like can prohibit video data from being edited by the other users. On the other hand, in a case where the operation restriction information is determined not to be included in the meta-information (No in step S9), the process proceeds to step S15.

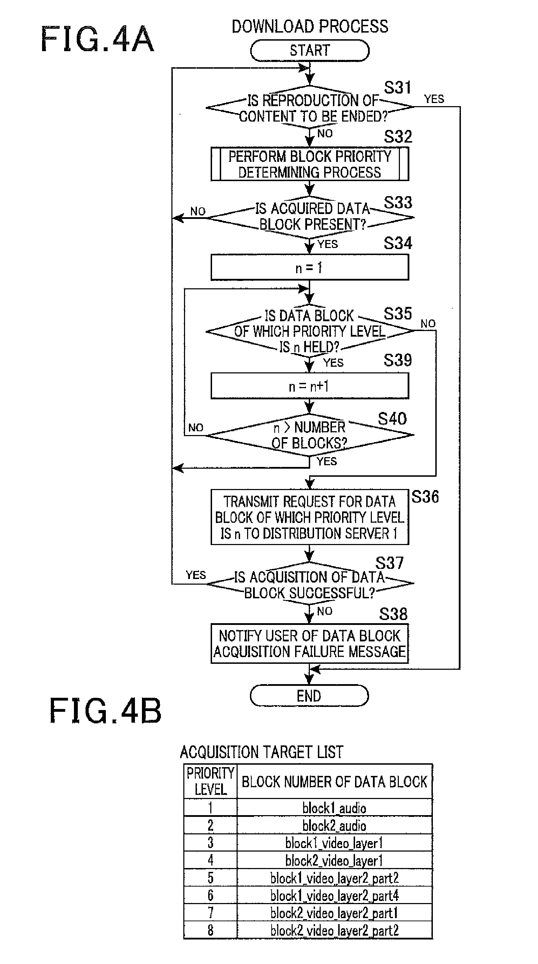

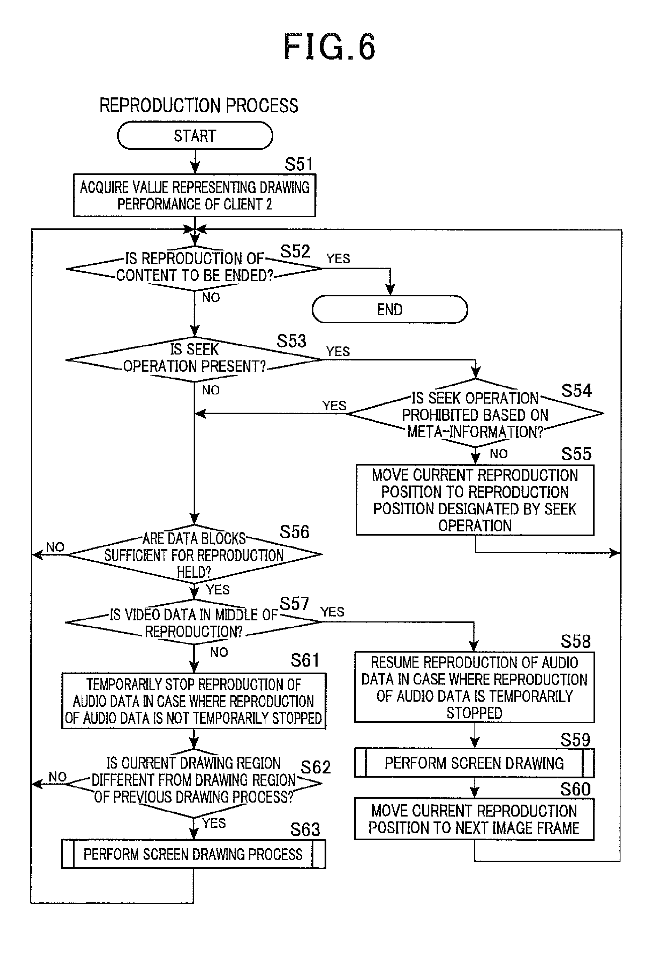

In step S10, the control unit 21 starts the download process illustrated in Fig. 4A and the reproduction process illustrated in Fig. 6. Here, the download process and the reproduction process, for example, are executed in parallel with each other based on a multitasking function of the OS. The download process and the reproduction process will be described later in detail. Thereafter, the control unit 21 determines whether or not the reproduction of the content ends (step S11). For example, when the user gives an instruction for ending the reproduction of the content by operating the operation unit 25a, the reproduction of the content is determined to be ended. In addition, when the content is reproduced to the end, the reproduction of the content is determined to be ended. In a case where the reproduction of the content is determined to be ended (Yes in step S11), the process illustrated in Fig. 3 is ended. On the other hand, in a case where the reproduction of the content is determined not to be ended (No in step S11), the process proceeds to step S 12. At this time, a drawing region in each image frame configuring the video data is a drawing region that is initially set based on the metainformation. In step S 12, the control unit 21 determines whether or not the work file is set in the process of step S8 described above. In a case where the work file is determined not to be set (No in step S12), the process returns to step S11. On the other hand, for example, even in a case where the generation of a work file is prohibited based on the operation restriction information, there are cases where a person uploading content or the like does not want to prohibit the reproduction that is based on a pseudo camera work performed by him. In such cases, there are cases where the work file disclosed by the above-described person or the like is set in step S8 described above. In a case where the work file is determined to be set (Yes in step S12), the process proceeds to step S13. In step S 13, the control unit 21 determines whether or not the pseudo camera work needs to be updated by referring to the set work file. For example, in a case where work information including a set of a reproduction position of an image frame to be displayed immediately after the determination made in step S13 and a coordinate position of the drawing region is present in the set work file, the update of the pseudo camera work is determined to be necessary. In a case where the update of the pseudo camera work is determined to be necessary (Yes in step S13), the process proceeds to step S14. On the other hand, in a case where the update of the pseudo camera work is determined to be unnecessary (No in step S 13), the process returns to step S 11. In step S14, the control unit 21 determines a drawing region of the current reproduction position based on the work information used in the determination made in step S 13.

In step S 15, the control unit 21 newly generates a work file. Thereafter, the control unit 21 describes the URL of the metafile of the content that is the reproduction target and the like in the newly generated work file (step S16). Thereafter, the control unit 21 starts the download process illustrated in Fig. 4A and the reproduction process illustrated in Fig. 6 (step S17). The process of step S17 is similar to the process of step S10. Thereafter, the control unit 21 determines whether or not the reproduction of the content is to be ended (step S18). The process of step S18 is similar to the process of step S11. In a case where the reproduction of the content is determined to be ended (Yes in step S18), the process proceeds to step S26. On the other hand, in a case where the reproduction of the content is determined not to be ended (No in step S18), the process proceeds to step S 19.

In step S 19, the control unit 21 determines whether or not there is a pseudo camera work operation through the operation unit 25a from the user. In a case where it is determined that there is a pseudo camera work operation (Yes in step S 19), the process proceeds to step S20. In step S20, the control unit 21 determines a drawing region designated by the pseudo camera work operation. Thereafter, the control unit 21 additionally writes the work information including the set of the coordinate position of the drawing region determined in step S20 and the current reproduction position to the work file generated in step S15 (step S21), and the process returns to step S18. In other words, a pseudo camera work state of the player is additionally written as work information.

On the other hand, in step S 19, in a case where it is determined that there is no pseudo camera work operation (No in step S19), the process proceeds to step S22. In step S22, the control unit 21 determines whether or not a time set in advance elapses from the previous pseudo camera work operation. This time, for example, is set to about five to ten seconds. In a case where the time set in advance is determined not to elapse from the previous pseudo camera work operation (No in step S22), the process returns to step S 18. On the other hand, in a case where the time set in advance is determined to elapse from the previous pseudo camera work operation (Yes in step S22), the process proceeds to step S23. In addition, in a case where there is no pseudo camera work operation after the start of the process illustrated in Fig. 3, the process proceeds from step S 19 described above to step S23.

In step S23, the control unit 21 determines whether or not a work file is set by the process of step S8 described above. In a case where the work file is determined not to be set (No in step S23), the process returns to step S18. On the other hand, in a case where the work file is determined to be set (Yes in step S23), the process proceeds to step S24. In step S24, the control unit 21 determines whether or not the update of the pseudo camera work is necessary by referring to the set work file. For example, in a case where the work information including the set of the reproduction position of the image frame to be displayed immediately after the determination made in step S24 and the coordinate position of the drawing region is present in the set work file, the update of the pseudo camera work is determined to be necessary. In a case where the update of the pseudo camera work is determined to be necessary (Yes in step S24), the process proceeds to step S25. On the other hand, in a case where the update of the pseudo camera work is determined not to be necessary (No in step S24), the process returns to step S18. In addition, in a case where there is no pseudo camera work operation, and the update of the pseudo camera work is not necessary, the drawing region in each image frame configuring video data is the drawing region that is initially set based on the meta-information.

In step S25, the control unit 21 determines a drawing region of the current reproduction position based on the work information used in the determination made in step S24. Thereafter, the control unit 21 additionally writes the work information including the set of the coordinate position of the drawing region determined in step S25 and the current reproduction position to the work file (step S21), and the process returns to step S18.

In step S26, the control unit 11 executes a process of disclosing the work file in which the work information is stored by the process of step S21 and ends the process illustrated in Fig. 3. In the process of disclosing the work file, the control unit 21 registers the work file in which the work information is stored in the distribution server 1 in association with the video data of the reproduced content. For example, the control unit 11 transmits a work file registration request to the distribution server 1. In the work file registration request, for example, a work file in which the work information is stored and a content ID of the reproduced content, and the like are included. The distribution server 1 registers the work file included in the work file registration request in the work file storage region 11d. In other words, the work file is uploaded so as to be shared among a plurality of users. At this time, in the work file, the content ID and the like of the reproduced content are additionally written. In this way, the work file is associated with the video data of the reproduced content. In addition, the work file may be configured so as to be registered in a server device other than the distribution server 1. In other words, the work file may be registered in a server device that another client other than the client 2 can access.

### (2-2. Download Process)

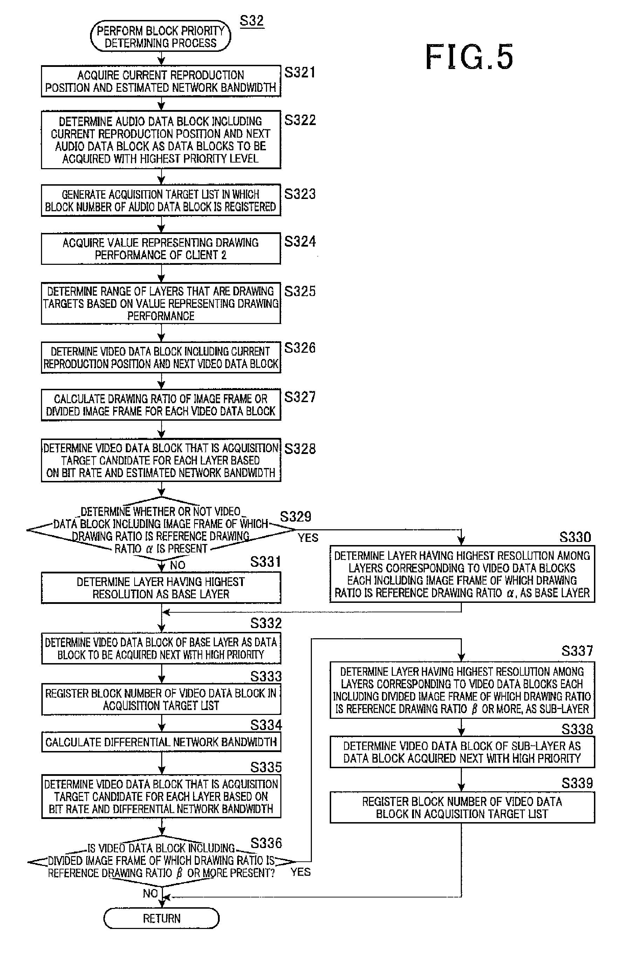

Next, the download process performed by the control unit 21 of the client 2 will be described with reference to Figs. 4A, 4B, and 5, and the like. When the download process illustrated in Fig. 4A is started, a video stream list corresponding to a video file represented in the meta-information is generated for each video file. For example, a video stream list of Layer 1, video stream lists of parts 1 to 4 of Layer 2, and video stream lists of parts 1 to 16 of Layer 3 are generated. The video stream list is a list in which block numbers of video data blocks configuring the video stream are registered. The video stream is generated from the video data included in the video file represented in the meta-information by the distribution server 1. The block numbers are serial numbers that are applied in reproduction order of video data blocks. The numbers of block numbers registered in the video stream lists are the same. In addition, an audio stream list corresponding to the audio file represented in the meta-information is generated. The audio stream list is a list in which the block number of each audio data block configuring the audio stream is registered. The audio stream is generated from audio data included in the audio file represented in the meta-information by the distribution server 1. In addition, there are cases where a plurality of audio files is represented in the meta-information. In such cases, audio stream lists corresponding to the audio files are generated. Here, the video stream list and the audio stream list are generated by the control unit 21. In this case, a time unit in which the video data or the audio data of the start position to the end position is partitioned is set in advance by the player software. Alternatively, the video stream list and the audio stream list may be configured to be generated by the distribution server 1 and be transmitted to the client 2.

In step S31 illustrated in Fig. 4A, the control unit 21 determines whether or not the reproduction of the content is ended. The process of step S31 is similar to the process of step S11. In a case where the reproduction of the content is determined to be ended (Yes in step S31), the process illustrated in Fig. 4A is terminated. On the other hand, in a case where the reproduction of the content is determined not to be ended (No in step S31), the process proceeds to step S32.

In step S32, the control unit 21 executes the block priority determining process. In the block priority determining process, as illustrated in Fig. 5, the control unit 21 acquires a current reproduction position and an estimated network bandwidth (step S321). The estimated network bandwidth is an estimated value of the bandwidth (bps) of the network NW between the distribution server 1 and the client 2. The estimated network bandwidth, for example, is calculated by measuring a data transmission time between the client 2 and the distribution server 1 by using the control unit 21.

Thereafter, the control unit 21 determines an audio data block including the current reproduction position and a next audio data block of the audio data block including the current reproduction position as data blocks that are to be acquired with a highest priority level from the audio stream list (step S322). Here, the current reproduction position is the reproduction position acquired in step S321. Thereafter, the control unit 21 generates an acquisition target list in which block numbers of the audio data blocks determined in step S322 are registered (step S323). To each block number registered in the acquisition target list, information representing that the block number is a block number of an audio data block is added.

Thereafter, the control unit 21 acquires a value that represents drawing performance of the client 2 (step S324). The drawing performance is rendering performance representing the number of pixels that can be drawn per frame (screen). In other words, the drawing performance represents the number of pixels of which data can be buffered per frame by a frame buffer. In addition, the acquisition of the value representing the drawing performance in step S324 may be performed only in the block priority determining process performed for the first time. Alternatively, the acquisition of the value representing the drawing performance may be configured to be performed before the process of step S31 after the download process illustrated in Fig. 4A is started.

Thereafter, the control unit 21 determines the range of layers that are drawing targets according to the value representing the drawing performance, which is acquired in step S324, in step S325. For example, it is assumed that the value representing the drawing performance of the client 2 is 4 M (pixels/frame). In this case, in the example illustrated in Fig. 2, by using the image frames of Layer 1 and Layer 2, the whole image frame can be drawn. On the other hand, by using the image frame of Layer 3, only 1/4 of the image frame can be drawn. Accordingly, in step S325 described above, as the range of layers that are the drawing targets, Layer 1 and Layer 2 are determined. In addition, for example, it is assumed that the value representing the drawing performance of the client 2 is 2 M (pixels/frame). In such a case, in the example illustrated in Fig. 2, by using only the image frame of Layer 1, the whole image frame can be drawn. Accordingly, in step S325 described above, as the range of layers that are drawing targets, Layer 1 is determined.

In a case where the image is enlarged, the value representing the drawing performance of the client 2 is corrected based on the zoom magnification at the time of the enlargement. For example, in a case where the zoom magnification is two times, the value representing the drawing performance of the client 2 is doubled. When the acquired value representing the drawing performance is 2 M (pixels/frame), the value is corrected to 4 M (pixels/frame). In such a case, in the example illustrated in Fig. 2, by using the image frames of Layer 1 and Layer 2, the whole image frame can be drawn. On the other hand, by using the image frame of Layer 3, only 1/4 of the image frame can be drawn. Accordingly, in such a case, in step S325 described above, as the range of layers that are the drawing targets, Layer 1 and Layer 2 are determined. On the other hand, for example, in a case where the zoom magnification is eight times, the value representing the drawing performance of the client 2 becomes eight times. When the acquired value representing the drawing performance is 2 M (pixels/frame), the value is corrected to 16 M (pixels/frame). In such a case, in the example illustrated in Fig. 2, by using the image frames of Layer 1 to Layer 3, the whole image frame can be drawn. Accordingly, in this case, in step S325 described above, as the range of layers that are drawing targets, Layer 1 to Layer 3 are determined. In other words, when the zoom magnification is less than two, only Layer 1 is determined. In addition, when the zoom magnification is two or more and less than eight, Layer 1 and Layer 2 are determined. When the zoom magnification is eight or more, Layer 1 to Layer 3 are determined.

Thereafter, the control unit 21 determines a video data block including the current reproduction position and a next video data block of the video data block including the current reproduction position from the video stream lists of the layers determined in step S325 described above (step S326). This determination is made for all the video stream lists of all the layers determined in step S325. For example, it is assumed that the layers determined in step S325 are Layer 1 and Layer 2. In such a case, video data blocks are determined for each of the video stream list of Layer 1, the video stream list of the part 1 of Layer 2, the video stream list of the part 2 of Layer 2, the video stream list of the part 3 of Layer 2, and the video stream list of the part 4 of Layer 2.

Thereafter, the control unit 21 calculates a drawing ratio of the image frame or the divided image frame included in the video data block determined in step S326 for each video data block determined as above based on the drawing region determined in step S14, S20, S25, or the like described above (step S327). Here, the drawing ratio of an image frame represents the ratio of the image frame or the divided image frame to the drawing region.

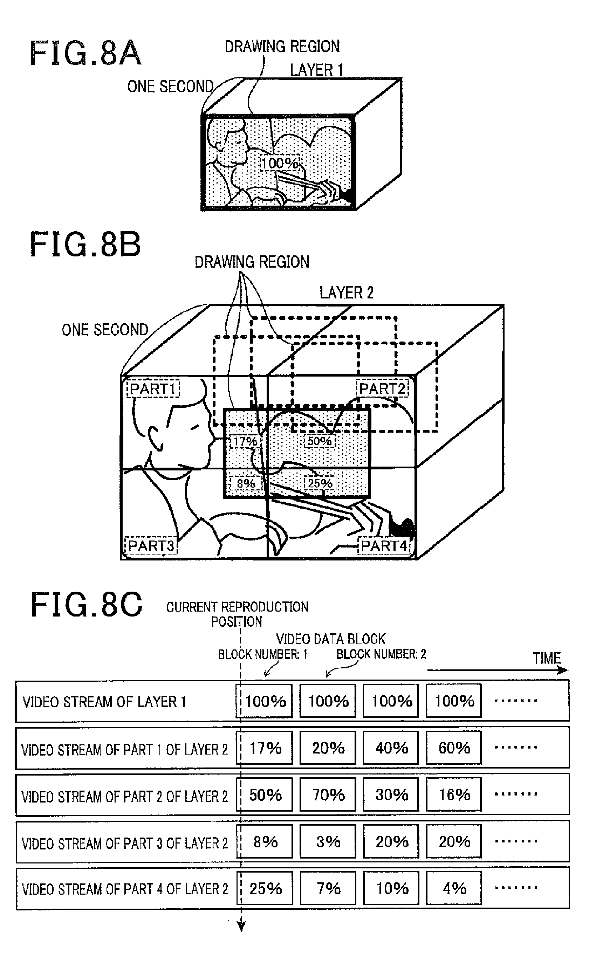

As illustrated in Fig. 8A, in Layer 1, the drawing ratio of the first image frame is 100%. Fig. 8B is a diagram that illustrates a drawing region of the divided image frame of Layer 2. In the case of the divided image frame, one part cannot cover the whole drawing region. As illustrated in Fig. 8B, in Layer 2, the drawing ratio of the first divided image frame in the part 1 is 17%. In addition, the drawing ratio of the first divided image frame in the part 2 is 50%. Furthermore, the drawing ratio of the first divided image frame in the part 3 is 8%. In addition, the drawing ratio of the first divided image frame in the part 4 is 25%. As above, the first divided image frame in the part 2 of Layer 2 has a highest drawing ratio. In the example illustrated in Fig. 8B, as denoted by broken lines, the position of the drawing region within each video data block changes for each divided image frame. In this case, the drawing region of an image frame or a divided image frame that follows after the image frame or the divided image frame of the current reproduction position, for example, is specified based on the work information described above. On the other hand, in a case where the work information is not present, the drawing region of the image frame or the divided image frame that follows after the image frame or the divided image frame of the current reproduction position is estimated based on the drawing region determined in step S 14, S20, S25, or the like described above. In other words, the drawing region is estimated and calculated based on a change in the movement of the drawing region. For example, in a case where the drawing region moves to the right side among a plurality of divided image frames, the drawing region in the next divided image frame is estimated and calculated to be positioned on a further right side. In addition, the drawing ratio of the divided image frame calculated in step S327 is an average or a sum of the drawing ratios of a plurality of divided image frames included in the video data block.

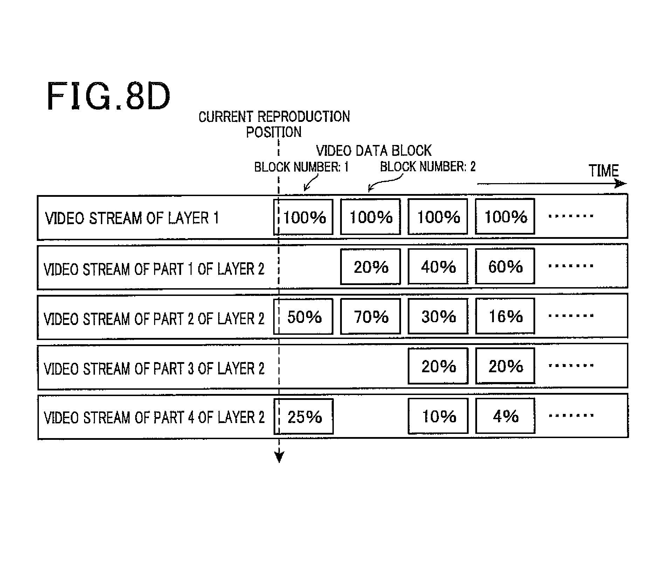

Thereafter, the control unit 21 determines a video data block that is an acquisition target candidate from among the video data blocks determined in step S326 described above for each layer based on the bit rate of the video data block determined in step S326 described above and the estimated network bandwidth acquired in step S321 described above (step S328). For example, the video data blocks that are the acquisition target candidates are selected such that the bit rate of the video data blocks of each layer is the estimated network bandwidth or less. Here, in the case of Layer 2, the video data blocks that are the acquisition target candidates are determined such that a sum of the bit rates of the video data blocks of the parts 1 and 4 is the estimated network bandwidth or less. In addition, the bit rate of each video data block, for example, is calculated based on the information included in the meta-information. As illustrated in Fig. 8C and Fig. 8D, in Layer 1, all the video data blocks determined in step S326 described above are determined. In Layer 2, among video data blocks (Fig. 8C) each having a block number of "1" determined in step S326 described above, a video data block including a divided image frame having a drawing ratio of 50% and a video data block including a divided image frame having a drawing ratio of 25% are determined (Fig. 8D). The reason for this is that, for example, in a case where a video data block including a divided image frame having a drawing ratio of 17% is additionally determined as an acquisition target candidate, the condition of "bit rate of video data block ≤ estimated network bandwidth" is not satisfied. On the other hand, among video data blocks (Fig. 8C) each having a block number of "2" determined in step S326 described above, a video data block including a divided image frame having a drawing ratio of 70% and a video data block including a divided image frame having a drawing ratio of 20% are determined (Fig. 8D). In this way, video data blocks including divided image frames each having a high drawing ratio are determined with priority. Accordingly, a high-quality image can be displayed in a broader display range.

Hereafter, among the video data blocks that are the acquisition target candidates determined in step S328 described above, the control unit 21 determines whether or not a video data block including an image frame or a divided image frame of which the drawing ratio is a reference drawing ratio α is present (step S329). For example, it is preferable that the reference drawing ratio α is set to 100%. However, the reference drawing ratio α may be set between 90% and 100%. Then, in a case where it is determined that that video data block including an image frame or a divided image frame of which the drawing ratio is the reference drawing ratio α is present (Yes in step S329), the process proceeds to step S330. On the other hand, in a case where it is determined that that video data block including an image frame or a divided image frame of which the drawing ratio is the reference drawing ratio α is not present (No in step S329), the process proceeds to step S331.

In step S330, among layers corresponding to the video data blocks each including an image frame or a divided image frame of which the drawing ratio is the reference drawing ratio α, the control unit 21 determines a layer having the highest resolution as a base layer, and the process proceeds to step S332. In other words, among a plurality of video data blocks, a video data block including an image frame having a high resolution and a high drawing ratio is determined as a video data block of the base layer with high priority. In this way, a higher-quality image can be displayed in a broader display range. In the example illustrated in Fig. 8C and Fig. 8D, a layer corresponding to the video data block including an image frame of which the drawing ratio is the reference drawing ratio α is only Layer 1. Accordingly, Layer 1 is determined as the base layer. In addition, it is assumed that layers corresponding to the video data blocks each including an image frame or a divided image frame of which the drawing ratio is the reference drawing ratio α are Layer 1 to Layer 3. In this case, Layer 3 that is a layer having the highest resolution is determined as the base layer. In addition, in this case, since there is no layer having a resolution higher than Layer 3, the process illustrated in Fig. 5 terminates, and the process returns to the process illustrated in Fig. 4A. On the other hand, in step S331, among layers corresponding to the video data blocks each including an image frame or a divided image frame having a highest drawing ratio, the control unit 21 determines a layer having the highest resolution as a base layer, and the process proceeds to step S332.

In step S332, the control unit 21 determines a video data block of the base layer that is determined in step S330 or step S331 described above as a data block to be acquired with priority after the audio data block. Thereafter, the control unit 21 registers the block number of the video data block determined in step S332 in the acquisition target list described above (step S333). In addition, information representing that the block number is a block number of a video data block and information representing a layer are added to the block number registered in the acquisition target list.

Thereafter, the control unit 21 calculates a differential network bandwidth acquired by subtracting the bit rate of the video data block of the base layer from the estimated network bandwidth (step S334). The differential network bandwidth is an example of a value that represents the degree of margin of the bandwidth of the network NW. The degree of margin of the bandwidth of the network NW is also referred to as a vacant bandwidth of the network NW. In addition, the degree of margin of the network NW is also referred to as a vacant bandwidth of the network NW between the client 2 and the distribution server 1. In addition, the degree of margin of the bandwidth of the network NW is also referred to as a usable bandwidth that can be used between the client 2 and the distribution server 1 through the network NW. In other words, the differential network bandwidth is a difference between the bandwidth of the network NW and a bandwidth consumed for the acquisition of a video data block of the base layer from the distribution server 1. Thereafter, the control unit 21 determines a video data block that is an acquisition target candidate for each layer again from among the video data blocks determined in step S326 described above based on the bit rate of the video data block determined in step S326 and the differential network bandwidth calculated in step S334 described above (step S335). In addition, since the video data block of the base layer is determined as a data block acquired in step S332 described above, the video data block is excluded from the acquisition target candidate. For example, the video data blocks that are the acquisition target candidates are selected such that the bit rate of the video data blocks of layers other than the base layer is the differential network bandwidth or less. In a case where there is a margin in the differential network bandwidth, at least one video data block including a divided image frame is determined. Through the process of step S335 described above, divided image data of a data amount corresponding to the differential network bandwidth can be acquired. In other words, as the value representing the degree of margin of the bandwidth of the network NW increases, more divided image frames that are acquisition targets are determined from among a plurality of divided image frames acquired by dividing the image frame configuring the video data. Accordingly, as there is a more margin in the bandwidth of the network NW, a higher quality image can be displayed. In addition, through the process of step S325 described above, as the value representing the drawing performance of the client 2 increases, more layers that are the drawing targets are determined. Accordingly, as the value representing the drawing performance of the client 2 increases, more divided image frames that are the acquisition targets are determined from among the plurality of divided image frames acquired by dividing the image frame configuring the video data. In addition, in the process of step S325, based on performance other than the drawing performance of the client 2, the range of layers that are drawing targets may be configured to be determined. As an example of the performance other than the drawing performance, there is a CPU processing capability (for example 200 Mpixel/sec) representing that data of how many pixels can be processed in a predetermined time.

Next, the control unit 21 determines whether or not a video data block including a divided image frame of which the drawing ratio is a reference drawing ratio β or more is present among the video data blocks that are the acquisition target candidates determined in step S335 described above (step S336). The reference drawing ratio β, for example, is set to 70%. However, the reference drawing ratio β may be set to between 60% and 90%. Then, in a case where it is determined that a video data block including a divided image frame of which the drawing ratio is the reference drawing ratio P or more is present (Yes in step S336), the process proceeds to step S337. On the other hand, in a case where it is determined that a video data block including a divided image frame of which the drawing ratio is the reference drawing ratio β or more is not present (No in step S336), the process illustrated in Fig. 5 terminates, and the process returns to the process illustrated in Fig. 4A.

In step S337, the control unit 21 determines a layer having the highest resolution among layers corresponding to the video data blocks each including a divided image frame of which the drawing ratio is the reference drawing ratio β or more as a sub-layer. Thereafter, the control unit 21 determines the video data block of the sub-layer determined in step S337 described above as a data block that is acquired after the video data block of the base layer with high priority (step S338). Thereafter, the control unit 21 registers the block number of the video data block determined in step S338 in the acquisition target list described above (step S339), and the process returns to the process illustrated in Fig. 4A. In addition, information representing that the block number is a block number of a video data block, information representing a layer, and information representing a part are added to the block number registered in the acquisition target list.

As illustrated in Fig. 4B, a priority level is associated with the block number of each data block registered in the acquisition target list. As a data block is associated with a priority level having a smaller value level, the data block has a higher priority level in acquisition. In addition, content of the acquisition target list changes as the reproduction of the content progresses.

Returning to the process illustrated in Fig. 4A, in step S33, the control unit 21 determines whether or not a data block acquired from the distribution server 1 is present by referring to the acquisition target list. In a case where the block number of a data block is registered in the acquisition target list, it is determined that a data block to be acquired is present. Then, in a case where the data block to be acquired is determined to be present (Yes in step S33), the process proceeds to step S34. On the other hand, in a case where the data block to be acquired is determined not to be present (No in step S33), the process returns to step S31.

In step S34, the control unit 21 sets "1" to a variable n. Thereafter, the control unit 21 determines whether or not a data block having a priority level of "n" is held in the buffer memory from among the acquisition target list (step S35). In other words, it is determined whether or not a data block having a priority level of "n" is already acquired in the process illustrated in Fig. 4A. Then, in a case where it is determined that the data block having the priority level of "n" is not held (No in step S35), the process proceeds to step S36. In step S36, the control unit 21 transmits a request for a data block having the priority level of "n" to the distribution server 1. Then, the control unit 21 determines whether or not the acquisition of the data block is successful (step S37). In a case where the data block is not received from the distribution server 1 in response to the request for a data block, the acquisition of the data block is determined to be unsuccessful (No in step S37), and the process proceeds to Sep S38. In step S38, the user is notified of a data block acquisition failure message, and the process illustrated in Fig. 4A terminates. The data block acquisition failure message is a message that represents a failure in the acquisition of a data block.

On the other hand, in a case where the reception of the data block that is distributed through a streaming distribution from the distribution server 1 is completed in response to the request for a data block, the acquisition of the data block is determined to be successful (Yes in step S37). In such a case, the control unit 21 causes the process to be returned to step S31 and, in a case where the reproduction of the content is not to be ended (No in step S31), executes the block priority determining process again (step S32). In other words, every time when the block data is acquired, block data that is an acquisition target is determined in the block priority determining process. When not a long time elapses from the previous block priority determining process, there is no change in the data block including the current reproduction position. Accordingly, the content of the acquisition target list generated in the block priority determining process, which is executed again, is the same as the content of the acquisition target list generated in the previous block priority determining process. In such a case, in step S35, in a case where the data block having a priority level af "n" is determined to be held (Yes in step S35), the process proceeds to step S39. In step S39, the control unit 21 adds "1" to the variable n. Thereafter, the control unit 21 determines whether or not the variable n is larger than the number of blocks (step S40). Here, the number of blocks is the number of data blocks of which block numbers are registered in the acquisition target list. Then, in a case where the variable n is determined not to be larger than the number of blocks (No in step S40), the process returns to step S35. At this time, in a case where a data block having a priority level of "n+1" is not held, a request for a data block having the priority level of "n+1" is transmitted to the distribution server 1 (step S36). On the other hand, in a case where the variable n is determined to be larger than the number of blocks (Yes in step S40), the process returns to step S31. This case is a case where all the data blocks registered in the acquisition target list at that time are acquired. As above, the block priority determining process is executed every time when block data is acquired from the distribution server 1. Accordingly, a data block that is optimal at each time point can be determined as an acquisition target according to the reproduction progress status and the acquisition progress status of the video data.

### (2-3. Reproduction Process)

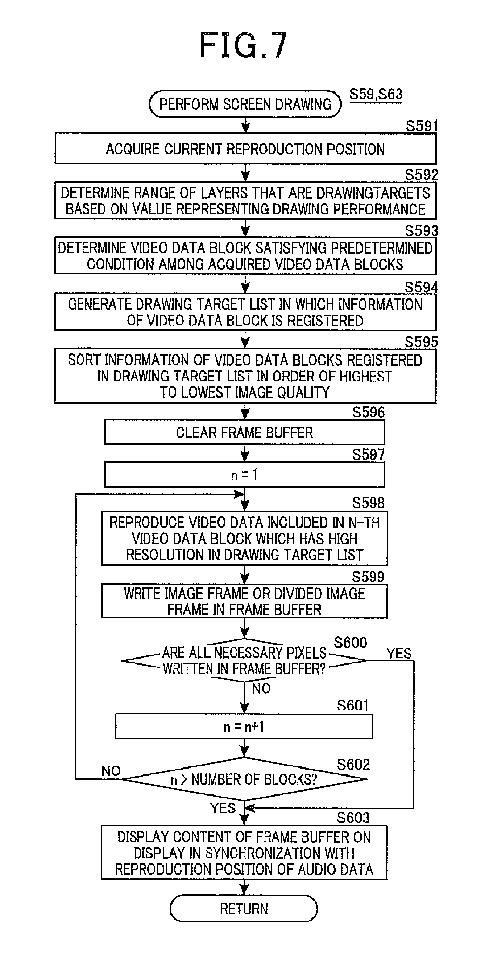

Next, the reproduction process performed by the control unit 21 of the client 2 will be described with reference to Fig. 6 and Fig. 7 and the like. When the reproduction process illustrated in Fig. 6 is started, the control unit 21 acquires a value representing the drawing performance of the client 2 (step S51). Thereafter, the control unit 21 determines whether or not the reproduction of the content is to be ended (step S52). The process of step S52 is similar to that of step S11. When the reproduction of the content is determined to be ended (Yes in step S52), the process illustrated in Fig. 6 terminates. On the other hand, in a case where the reproduction of the content is determined not to be ended (No in step S52), the process proceeds to step S53.

In step S53, the control unit 21 determines whether or not a seek operation performed by the user through the operation unit 25a is present. Here, the seek operation, for example, is an operation of skipping one or more image frames from an image frame that is currently displayed. In a case where the seek operation is determined not to be present (No in step S53), the process proceeds to step S56. On the other hand, in a case where the seek operation is determined to be present (Yes in step S53), the process proceeds to step S54. In step S54, the control unit 21 determines whether or not a seek operation is prohibited based on the meta-information. In a case where the above-described operation restriction information is included in the meta-information, a seek operation is determined to be prohibited. In a case where a seek operation is determined to be prohibited (Yes in step S54), the process proceeds to step S56. On the other hand, in a case where a seek operation is determined not to be prohibited (No in step S54), the process proceeds to step S55. In step S55, the control unit 21 moves the current reproduction position to a reproduction position designated by the seek operation, and the process returns to step S52.

In step S56, the control unit 21 determines whether or not data blocks sufficient for reproduction are held in the buffer memory. For example, in a case where image data corresponding to image frames of several minutes set in advance is held in the buffer memory, data blocks sufficient for reproduction are determined to be held in the buffer memory. Then, in a case where data blocks sufficient for reproduction are determined to be held in the buffer memory (Yes in step S56), the process proceeds to step S57. On the other hand, in a case where data blocks sufficient for reproduction are determined not to be held in the buffer memory (No in step S56), the process returns to step S52.

In step S57, the control unit 21 determines whether or not video data is in the middle of reproduction. For example, in a case where an image frame is in the middle of a transition process, it is determined that the video data is in the middle of reproduction (Yes in step S57), and the process proceeds to step S58. On the other hand, in a case where the transition of an image frame is stopped, it is determined that the video data is not in the middle of reproduction (No in step S57), and the process proceeds to step S61. In step S58, in a case where the reproduction of audio data is temporarily stopped, the control unit 21 resumes the reproduction of the audio data. Thereafter, the control unit 21 executes the screen drawing process (step S59). This screen drawing process will be described later in detail. Thereafter, the control unit 21 moves the current reproduction position to a next image frame (step S60), and the process returns to step S52. On the other hand, in step S61, in a case where the reproduction of audio data is not temporarily stopped, the control unit 21 temporarily stops the reproduction of the audio data. Thereafter, the control unit 21 determines whether or not the current drawing region is different from the drawing region of the previous drawing process (step S62). In a case where the current drawing region is determined not to be different from the drawing region of the previous drawing process (No in step S62), the process returns to step S52. On the other hand, in a case where the current drawing region is determined to be different from the drawing region of the previous drawing process (Yes in step S62), the process proceeds to step S63. In step S63, the control unit 21 executes the screen drawing process. The reason for this is that, in a case where the drawing region is updated in the process of step S 14, S20, or S25 or the like described above during temporary stop, it is necessary to perform the screen drawing process again.

Next, in the screen drawing process, as illustrated in Fig. 7, the control unit 21 acquires the current reproduction position (step S591). Thereafter, the control unit 21 determines a range of layers that are drawing targets based on the value representing the drawing performance that is acquired in step S51 described above (step S592). The process of step S592 is similar to that of step S325. Thereafter, the control unit 21 determines video data blocks satisfying predetermined conditions from among the acquired video data blocks (step S593). For example, video data blocks satisfying all the following conditions (1) to (3) are determined as the predetermined conditions.
(1) The current reproduction position is included.
(2) At least a part of an image frame or a divided image frame is included in the current drawing region.
(3) The layer belongs to drawing target layers.

Here, the current reproduction position is the reproduction position that is determined in step S591 described above. In addition, the current drawing region is the drawing region that is determined in step S 14, S20, or S25 or the like described above. Furthermore, the drawing target layers are the layers determined in step S592 described above.

Thereafter, the control unit 21 generates a drawing target list in which information of video data blocks determined in step S593 described above is registered (step S594). Here, the information of video data blocks, for example, represent block numbers of the video data blocks. Thereafter, the control unit 21 sorts the information of the video data blocks registered in the drawing target list in descending order of image quality (step S595). In other words, the information of the video data blocks is sorted in descending order of resolutions of video data included in the video data blocks. Thereafter, the control unit 21 clears the frame buffer of the video RAM 23 (step S596).

Thereafter, the control unit 21 sets "1" to the variable n (step S597). Thereafter, the control unit 21 reproduces video data, for example, corresponding to one image frame or one divided image frame included in the n-th video data block, which has the highest resolution, included in the drawing target list from the buffer memory (step S598). Then, the control unit 21 writes image frames or divided image frames configuring the reproduced video data to the frame buffer (step S599). In addition, the image frames or the divided image frames are written with being enlarged or reduced according to the frame buffer. However, this writing is controlled so as not to overwrite the image frame or the divided image frame to a pixel for which writing is completed. Thereafter, the control unit 21 determines whether or not all the necessary pixels of the image frames are written to the frame buffer (step S600). In a case where it is determined that all the necessary pixels are not written to the frame buffer (No in step S600), the process proceeds to step S601. On the other hand, in a case where it is determined that all the necessary pixels are written to the frame buffer (Yes in step S600), the process proceeds to step S603.

In step S601, the control unit 21 adds "1" to the variable n. Thereafter, the control unit 21 determines whether or not the variable n is larger than the number of blocks (step S602). Here, the number of blocks is the number of video data blocks of which information is registered in the drawing target list. Then, in a case where the variable n is determined not to be larger than the number of blocks (No in step S602), the process returns to step S598. While the process of step S598 is repeatedly performed for a plurality of times, video data having a high resolution is reproduced with priority. Accordingly, in the process performed first, divided image frames corresponding to divided image data having a high resolution are written (first writing process). In the process performed thereafter, for example, image frames configuring video data having a low resolution are written to write areas of the frame buffer in which the divided image frames are not written (second writing process). On the other hand, in a case where the variable n is determined to be larger than the number of blocks (Yes in step S602), the process proceeds to step S603.

In step S603, the control unit 21 displays the content of the frame buffer on the display in synchronization with the reproduction position of the audio data. In other words, the control unit 21 draws the current drawing region of the image frame written to the frame buffer on the screen of the display, thereby displaying the content (display process). Accordingly, for example, at least in a part of the image frame configuring low-resolution video data, divided image data having an intermediate resolution or a high resolution can be displayed with higher efficiency. For example, a part of the drawing region of an image frame configuring video data of a low resolution is replaced with the divided image data so as to be displayed. In this way, for example, in an area for which a high-resolution image cannot be acquired, an image without any defect can be displayed. Accordingly, the image having no defect can be seen by the user. In addition, for example, in a part of the drawing region of an image frame configuring low-resolution video data, divided image data may be configured to be displayed in an superimposing manner.

In another example of the process of step S337, the control unit 21 may be configured to determine a layer having the highest resolution as a sub-layer from among layers corresponding to video data blocks each including a divided image frame that includes an area narrower than the drawing region in an area of a predetermined range from the center of the drawing region. Here, examples of the area of the predetermined range include a circular area, a rectangular area, and the like. By configuring as such, even in a case where the drawing ratio is low, divided image data including a center portion of the drawing region can be acquired with priority. Accordingly, a high-quality image can be displayed in the area of the center portion of the drawing region with priority.

In addition, there are cases where a work file uploaded by another user is acquired from the distribution server 1. In such cases, based on work information included in the acquired work file, the control unit 21 displays a drawing region represented by the work information of an image frame configuring video data on the display. In other words, the drawing region of the image frame configuring the video data is displayed along the drawing region represented by the acquired work information.

As described above, according to the above-described embodiment, according to , at least one of the degree of margin of the bandwidth of the network NW between the distribution server 1 and the client 2 and the performance of the client 2, the client 2, for example, determines at least one piece of the divided image data that is an acquisition target from among a plurality of pieces of divided image data configuring video data having an intermediate resolution or a high resolution. Then, the client 2, for example, displays the determined divided image data in at least a part of the image frame configuring low-resolution video data. Therefore, according to the present embodiment, a high-resolution image can be displayed in only a part of the image frame having a low resolution according to the degree of margin of the bandwidth of the network NW, and accordingly, an image having a low resolution and a high resolution can be displayed in a flexible manner. In addition, according to the present embodiment, a high-resolution image can be displayed only in a part of the image frame having a low resolution according to the performance of the client 2, and therefore, an image having a low resolution and an image having a high resolution can be displayed in a flexible manner.

Generally, there is a situation in which the implementation of a high resolution of video data is quickly responded by devices such as a camera but is not responded quite well by a transmission infrastructure such as a network and display terminals of final users. Even in such a situation, according to the present embodiment, for example, even in a case where a high-resolution video is viewed using a display corresponding to a low resolution, for example, the user can display the high-resolution video, for example, only when a zoom-in operation is performed. In other words, when the range in which the user views is narrowed, a high-resolution video can be provided to the user.

### Reference Sign List

- 1: Distribution server
- 2: Client
- 11: Storage device
- 21: Control unit
- 22: Storage unit
- S: Communication system

## Claims

1. A communication system in which a terminal device and a server device are communicable with each other through a network,
wherein the server device comprises a storage means that stores a plurality of pieces of video data including first video data and second video data, the first video data representing a display target with a first resolution, the second video data representing the display target with a second resolution that is higher than the first resolution,
at least the second video data is configured by a plurality of pieces of divided image data that is acquired by dividing image frames configuring the second video data, and
the terminal device comprises:
a first control means that sequentially acquires image frames configuring the first video data from the server device and controls to display a video based on the acquired image frames;
a first determination means that determines at least one piece of the divided image data that is an acquisition target among the plurality of pieces of the divided image data configuring the second video data according to at least one of a degree of margin of a bandwidth of the network between the terminal device and the server device and performance of the terminal device; and
a second control means that controls to display the divided image data determined by the first determination means at least in a part of the image frames configuring the first video data.

2. The communication system according to claim 1,
wherein the second control means replaces a part of a display range of the image frame configuring the first video data with the divided image data determined by the first determination means so as to be displayed.

3. The communication system according to claim 1 or 2,
wherein the terminal device further comprises a frame buffer in which the image frame of the display range is written, and
the second control means executes:
an acquisition process of acquiring the divided image data determined by the first determination means;
a first writing process of writing the image frame configured by the acquired divided image data in the frame buffer;
a second writing process of writing the image frame configuring the first video data acquired by the first control means in a write area of the frame buffer in which the image frame is not written by the first writing process; and
a display process of displaying the image frames written in the frame buffer by the first and second writing processes.

4. The communication system according to claim 1 or 2,
wherein the first control means sequentially acquires the video data, the video data being partitioned into a plurality of blocks at units of a predetermined time, each of the blocks including one or a plurality of the image frames configuring the first video data from the server device and controls to display a video based on the video data acquired for each block, and
the first determination means determines the divided image data that is the acquisition target every time the video data for each block is acquired.

5. The communication system according to claim 1 or 2,
further comprising a second determination means that determines preferentially the video data having a high resolution and a high ratio of occupancy of the image frame in a display range for a display among the plurality of pieces of the video data stored in the storage means as the first video data,
wherein the first control means acquires the image frames configuring the first video data determined by the second determination means from the server device with higher priority than the plurality of pieces of the divided image data configuring the second video data.

6. The communication system according to claim 1 or 2,
wherein the first determination means determines more pieces of the divided image data that is the acquisition target among the plurality of pieces of the divided image data as a value representing the degree of margin is larger or a value representing the performance is larger.

7. The communication system according to claim 1 or 2,
further comprising a third determination means that determines a display range designated as a range to be displayed in a plurality of the image frames configuring the first video data,
wherein the first determination means determines preferentially the divided image data having a high ratio of occupancy of the image frame in the display range determined by the third determination means.

8. The communication system according to claim 1 or 2,
further comprising a third determination means that determines a display range designated as a range to be displayed in a plurality of the image frames configuring the first video data,
wherein the first determination means determines preferentially the divided image data configuring the image frame including an area narrower than the display range in an area of a predetermined range and from the center of the display range determined by the third determination means.

9. A program causing a computer of a terminal device, which is communicable through a network with a server device storing a plurality of pieces of video data including first video data and second video data, the first video data representing a display target with a first resolution, the second video data representing the display target with a second resolution higher than the first resolution, and storing at least a plurality of pieces of divided image data acquired by dividing image frames configuring the second video data, to execute:
a display step of sequentially acquiring image frames configuring the first video data from the server device and displaying a video based on the acquired image frames;
a determination step of determining at least one piece of the divided image data that is an acquisition target among the plurality of pieces of the divided image data configuring the second video data according to at least one of a degree of margin of a bandwidth of the network between the terminal device and the server device and performance of the terminal device; and
a display step of displaying the determined divided image data at least in a part of the image frame configuring the first video data.

10. A terminal device that is communicable through a network with a server device that stores a plurality of pieces of video data including first video data, second video data, the first video data representing a display target with a first resolution, the second video data representing the display target with a second resolution higher than the first resolution, and stores at least a plurality of pieces of divided image data that is acquired by dividing image frames configuring the second video data,
the terminal device comprising:
a first control means that sequentially acquires image frames configuring the first video data from the server device and controls to display a video based on the acquired image frames;
a first determination means that determines at least one piece of the divided image data that is an acquisition target among the plurality of pieces of the divided image data configuring the second video data according to at least one of a degree of margin of a bandwidth of the network between the terminal device and the server device and performance of the terminal device; and
a second control means that controls to display the divided image data determined by the first determination means at least in a part of the image frame configuring the first video data.

11. A video display method, which is performed by a terminal device that is communicable through a network with a server device that stores a plurality of pieces of video data including first video data and second video data, the first video data representing a display target with a first resolution, the second video data representing the display target with a second resolution higher than the first resolution, and stores at least a plurality of pieces of divided image data that is acquired by dividing image frames configuring the second video data,
the video display method comprising:
a display step of sequentially acquiring image frames configuring the first video data from the server device and displaying a video based on the acquired image frames;
a determination step of determining at least one piece of the divided image data that is an acquisition target among the plurality of pieces of the divided image data configuring the second video data according to at least one of a degree of margin of a bandwidth of the network between the terminal device and the server device and performance of the terminal device; and
a display step of displaying the determined divided image data at least in a part of the image frame configuring the first video data.
